# EUROPEAN PATENT SPECIFICATION

(11) **EP 2 213 363 B1**
(45) Date of publication and mention of the grant of the patent: **17.04.2013**
(21) Application number: 08172604.4
(22) Date of filing: 22.12.2008
(51) Int. Cl.: B01D 63/02, B01D 63/04, C02F 1/44

(54) **Hollow fibre filtration device**
Hohlfaserfiltriervorrichtung
Dispositif de filtration à fibres creuses

(43) Date of publication of application: 04.08.2010
(73) Proprietor: Seccua GmbH Deutschland, 86989 Steingaden (DE)
(72) Inventor: Hank, Michael, 86989, Steingaden (DE)
(74) Representative: Kopf, Korbinian Paul

(56) References cited:
- EP-A- 1 219 342
- AU-A1- 2004 203 856
- US-A- 4 080 296
- US-A- 4 476 015
- US-A- 4 645 601
- US-A- 5 192 478
- US-A- 5 221 473

## Description

### Field of the invention

The present invention relates to a filtration device for filtering a fluid, a filtration system capable for connecting a filtration device and a method for manufacturing a filtration device.

### Background of the invention

There are a variety of filtration technologies. In the following the focus is set on membrane filters, which can be used for the filtration or purification of liquids as well as for the separation or purification of gases. Typical water treatment applications are the filtration of surface water, municipal or domestic wastewaters and industrial waters as for example in the beverage-, food-, and biotechnology, in order to separate or remove suspended solids, micro-organisms, pathogens, macro-molecules or other liquids from the water. Corresponding to the diameter of the pores in the filter membrane one distinguishes the micro-filtration from the ultra-filtration and the nano-filtration, respectively. For example the ultra-filtration systems consist of pores with diameters ranging from 0.01 µm to 0.1 µm, whereas the microfiltration covers the range from 0.1 µm to 1 µm.

The main advantage of the ultra-filtration in comparison to conventional filtration methods is the germ free filtrate, because neither viruses nor bacteria can pass the membrane. Therefore the ultra-filtration is especially suited for the disinfection of surface water, spring water or well water and subsequent usage as drinking water.

For technical applications the microporous filter membranes are often produced in modules, manufactured of foils, conduits, hollow fibers or capillaries, respectively. Depending upon design and modes of operation the necessary inlet and outlet arrangements may be arranged perpendicularly, be located at opposing ends of the filter housing or collocated at one end of the housing. Basically there are three different modes of operation: Dead-end, cross-flow and submerged systems, the latter combining the characteristics of the dead-end and the cross-flow method, respectively. The dead-end method is similar to conventional filtration, wherein the fluid to be purified is directed perpendicularly to the membrane. This static method is only using the pressure difference as driving force. The build-up of a filter cake on the membrane slows down the filtration until it is removed by flushing the system.

In contrast to the static dead-end method the cross-flow is a dynamic filtration. The development of a filter cake or clogging layer is limited by directing the feed liquid tangentially to the membrane with velocities of e.g. greater than 2 m/s. The part of the suspension that was retained in the filter volume, the retentate, is re-circulated over the membrane. In contrast to the dead end method the flushing of the membrane is done continuously during the operation.

US 4 645 601 A describes a reverse osmosis system for water treatment including a head member, an integral disposable reverse osmosis unit and an end member.

AU 2004 203 856 A1 shows a frameless array of hollow fiber membranes and method of maintaining clean fiber surfaces.

EP 1 219 342 A1 describes a device for treating a liquid, especially water, comprising a tubular housing containing a cylindrical membrane for separating the liquid into permeate and concentrate, a feed line for the liquid, a first branch for the concentrate and a second branch for the permeate.

### Summary of the invention

It is an object of the present invention to provide a filtration device having a simplified arrangement of connections of a filtration device and the method for manufacturing such filtration device.

This object is met by the subject matter of the independent claims. Further embodiments are incorporated in the dependent claims.

In the present invention the term filtrate refers to the part of the fluid that passes through the filter membrane, whereas the retentate defines the part of the fluid that overflows or flushes the filter membrane without penetrating the membrane.

According to the invention a filtration device for filtering a fluid is provided, wherein the filtration device comprises a supporting structure with a filtrate volume, a first opening arrangement and a second opening arrangement as well as a filter volume with a first opening arrangement and a second opening arrangement. Furthermore the filtration device comprises a collecting conduit with a first opening arrangement and a second opening arrangement and a flushing conduit having a first opening and a second opening, wherein the filter volume is connected via a fluid permeable membrane with the filtrate volume and the first opening arrangement of the filter volume is connected with the first opening arrangement of the supporting structure; wherein the second opening arrangement of the filter volume is connectable with the first opening of the flushing conduit by a fluid connection; wherein the first opening arrangement of the collecting conduit is connected to the filtrate volume; and wherein the second opening arrangement of the collecting conduit corresponds to the second opening arrangement of the supporting structure; and wherein the flushing conduit in the region of the second opening arrangement of the supporting structure is positioned inside the collecting conduit.

In this way the filtration device collocates the second opening of the flushing conduit and the second opening of the collecting conduit at one side of the supporting structure. A fluid connection for the retentate is provided, leaving the filter volume via the second opening arrangement, with the first opening of the flushing conduit, wherefrom the fluid is directed to the second opening of the collecting conduit. The supporting structure can stabilize several components or the filtration device, wherein the supporting structure has not to be hermetically closed. The filtrate volume may be a filtrate compartment.

Furthermore to position the flushing conduit in the region of the second opening of the supporting structure inside the collecting conduit allows providing one opening of the supporting structure for two conduits. In addition the region of the second opening of the supporting structure is defined by the thickness of the respective wall. Therefore it is possible that the flushing conduit is positioned in the filtrate volume at another location than given by the second opening of the supporting structure. In case of a centrally positioned collecting conduit the flushing conduit may be directed along the outer side of the filtrate volume and only directed inside the central conduit, when reaching the region of the second opening arrangement of the supporting structure. This may be possible for example when the collecting conduit has only the length of the thickness of the supporting structure. The latter dimension is sufficient for collecting the filtrate, if the second opening of the housing is positioned at the lower part of the filtration device and thus the filtrate can flow into the collecting conduit due to gravity.

According to the invention the supporting structure is a housing.

In this way the supporting structure can be closed, to further stabilize and protect the hollow fibers. The main object of the housing is to build a confined filtrate volume, in other words a filtrate compartment. However, it should be noted that according to another embodiment, the housing may be provided externally, wherein the filtration device can be introduced into the external housing. In particular it is possible to provide a single housing for a plurality of filtration devices. In particular the filtration device may be exchanged, wherein the housing may be reused.

The filtration device comprises a collecting conduit, wherein the first opening arrangement of the collection conduit may be a at least one perforation of the collecting conduit and wherein the material of the collecting conduit.

A perforation allows to maintain the structure of the collecting conduit as a supporting structural element, and at the same time to receive the filtrate. The perforation of the collecting conduit may be adapted to collect the filtrate over the whole height of the interior of the housing. In this way the filtrate flows from the filter membrane in the filtrate compartment and subsequently may flow into the first opening arrangement of the collecting conduit, in other words to the closest perforation achievable by gravity.

According to another embodiment of the invention the flushing conduit comprises a material selected from a group consisting of a food persistent plastic, a plastic coated with a food persistent material and a metal.

For particular purposes the material used for the conduits may have to fulfill the high standards in drinking water supply. Therefore a suited material for the conduits is for example food persistent by itself or at least coated with a food persistant layer.

According to the invention the material of the filter volume comprises a material selected from a group, the group consisting of hollow fibers in form of a single bore or hollow fibers in form of a multi bore.

Hollow fibers are commonly used in ultra-filtration and may be produced as single bore or multi bore in other words as a unit of several hollow fibers. Materials may be organic polymers as well as inorganic materials. Organic materials are cost effective by using polymer membranes. The hydrophilicity and anti-fouling properties can be influenced by using different additives during the membrane forming process. Ceramic membranes are employed if there are high demands regarding the chemical and thermal stability of the membrane.

According to the invention the housing comprises a cylindrical outer wall, a first front face and a second front face. The front faces may be made of a potting compound.

In this way the housing defines a sealed filtrate room. An often used geometry in ultra-filtration devices is a cylindrical geometry, wherein the height of the cylinder often is larger than the width. Furthermore, the two front faces also serve for a stabilizing connection with the housing, after for example the potting compound is hardened. In this way a hollow fiber module and a capillary membrane module, respectively, can be provided, which can be utilized in technical systems.

According to another embodiment of the invention the flushing conduit is positioned concentrically in the collecting conduit.

In this way the flush conduit can be easily positioned over the entire length of the collecting conduit. The collected filtrate can flow evenly distributed in the inner space between the outside of the flushing conduit and the inner sides of the at least partly perforated collecting conduit. In case the flushing conduit is partly not covered by the collecting conduit because of different lengths, the filtrate can still flow along the flushing conduit in order to be subsequently led into the collecting conduit, into a front face opening thereof.

According to another embodiment of the invention the collecting conduit is coaxially positioned in relation to the inner wall of the housing.

A concentrically arrangement is an effective space saving way to direct the flushing conduit inside the housing. On the one hand more filter volume can be packed into the housing and on the other hand no filter volume has to be squeezed in order to free a space for the collecting conduit. This is valid in particular for fiber bundles in the dimension of the collecting conduit. Multi-bore hollow fibers often use arrangements centered around the middle axis, not least because often the collecting conduit is situated in this middle axis position. The already freed space for the collecting conduit can be used by the flushing conduit. Furthermore a coaxial arrangement of the collecting conduit and the flushing conduit simplifies the handling while manufacturing the device because only one axis is provided for two conduits.

According to the invention collecting conduit is positioned eccentrically in relation to the inner wall of the housing or the supporting structure.

By using an eccentric arrangement, two or more filtration devices can be combined while minimizing the distance of each second opening arrangement of the respective filtration device. For example a double module can save material for conduits by using a common or compact connection and conduit, respectively.

According to another embodiment the second arrangement of openings of the collecting conduit, the second opening of the flushing conduit and the first opening arrangement of the housing are positioned at the first front face.

By using one front face as common connection plate no connections have to be provided in for example in the wall or a back face of the housing. This allows to provide a connection onto which the filtration device can be plugged without the need to provide further elements. Furthermore a potting face can be used for providing tight connections by the potting technique. It is possible to use for the connections the face of the housing that is facing the ground to ensure that the filtrate is collected via gravity. Due to the collocation of the connections of the first opening arrangement of the housing and the second opening of the flushing conduit a re-circulating of the retentate into the first opening arrangement of the housing and thus into the filter volume can easily be realized.

According to another embodiment of the invention the second opening arrangement of the collecting conduit comprises a collecting tube socket and a second opening of the flushing conduit comprises a flushing tube socket as connections to outside of the filtration device.

In this way liquids of the collecting conduit and the flushing conduits can be connected to the outside or to the respective conduits of other modules. Thus for example the outflow of the collecting conduit may be connected to a storage conduit directing the purified water in a storage tank. Several modules can be connected to this storage conduit in order to collect the total outflow of the filtration system.

According to another embodiment of the invention the flushing conduit outranges the second opening of the collecting conduit.

This design facilitates any connection to the flushing conduit, because the tube socket is freely accessible. Thus, a coaxial combined connection plug may be provided on the other side to receive the respective coaxial arrangement of the flushing conduit and the collecting conduit.

According to another embodiment of the invention the second opening arrangement and the first opening arrangement of the flushing conduit penetrates the second front face of the supporting structure or housing.

In this way via the second opening arrangement of the filter volume any liquid, for example the retentate, can be transported to the outside of the supporting structure or housing. Because the first opening arrangement of the flushing conduit also penetrates the second front face of the housing, a fluid connection as for example an arrangement of conduits can be realized outside of the housing.

According to another embodiment the fluid connection between the second opening arrangement of the filter volume and the first opening arrangement of the flushing conduit is formed by a limitation volume, the limitation volume comprising the second front face of the housing and a cap covering the second front face.

The usage of a cap instead of conduits for the fluid connection is a simple, low-maintenance and cost effective way to fluidly connect the respective conduits. The cap covers for example the entire second front face of the housing and may also overlap over the outer diameter of the housing. The cap needs to have tight fit to the housing in order to neither admit any germs to enter nor to let any retentate flow out uncontrolled. In this way the filtration device or module comprises as few openings as possible and all connections to the outside can be collocated on the opposite front side. Therefore the modules can easily be combined in parallel or in other group arrangements.

According to another embodiment of the invention the second opening arrangement and the first opening of the flushing conduit are directly or indirectly connected inside the housing.

In this way there is no need of penetration of the flushing conduit or the ends of the filter volumes of the front face of the filtration device. It may be possible to design on only one side of the front face a second opening arrangement of the filter volume and direct the fluid inside the front face to the first opening arrangement of the flushing conduit. This design may be also suited for other filter types than multi bore hollow fiberes, which comprise only a single outflow portion and can be easily connected inside the housing and need low maintenance thereafter.

Furthermore the present invention provides a method for manufacturing a filtration device according to an embodiment of the invention, wherein the method comprises the following steps: sealing of the first arrangement of openings of a filter volume protruding from a later first front face of a housing, potting or molding of a space between the inner surface or wall of a housing and an outer surface of a collecting conduit protruding from the later first front face up to a predefined thickness; and manufacturing of a first front face and a first opening arrangement by separating an annulus up to the outer surface of the collecting conduit.

In this way various combinations of fiber arrangements and potting compounds can be provided. A filter volume in form of fibers may be sealed at the ends of the fibers, which ends extend over the later front face. The closed fibers are sealed against the potting or molding compound. When separating the annulus after having molded or potted, the closed end of the fibers are also cut off, so that the respective opening arrangement of the filter volume is re-established. Further, the separation of an annulus for re-opening the filter volume, can be easily done, because the diameter of the collecting conduit can be left untouched and therefore left open during the entire manufacturing process. The flushing conduit does not complicate the sawing process because it is positioned in the collecting conduit.

Cutting off the fiber ends can be done for example by using e.g. a circular saw, a diamond wire saw or laser cutting technology. With the proposed method the production of hollow fiber membrane modules can be significantly simplified and save time and costs. Handling of a sawing device is easier due to the single axis provided by the collecting conduit.

According to another embodiment of the invention a filtration system for filtering a fluid is provided, wherein the filtration system comprises an interface for employing the filter device according to an embodiment of the invention with a collecting conduit with a concentrically positioned flushing conduit.

Via the interface several filtration devices or modules, respectively can be connected in series or parallel. Therefore the quantity of liquid to be purified can be enhanced. The installation of suited valves may allow disconnecting at least one module from the filtration system such that the selected module or cartridge can be maintained or replaced by another module.

According to another embodiment of the filtration the system the filtration system is adapted for disinfection of drinking water and/or gray water in public and/or private institutions as hospitals, nursing homes, schools and/or public swimming pools.

In this way an elimination of germs can be done at the point of use or point of entry, respectively. The installation of the point of use filtration system is done directly at the location of the usage as for example in shower rooms or lavatories. Filtration system with a performance of e.g. about 5 m³/ h can be employed by the point of entry solution and serve for example as disinfection units of grey water, processing water or drinking water of restaurants, hotels, industries or office buildings. Furthermore the filtration system can be designed as portable or mobile unit for the usage in transport means as for example in trains or aircrafts.

According to another embodiment of the invention the filtration system the filtration system is designed as a water treatment plant comprising several filtration devices with modular connections.

In this way water treatment plants with performances ranging from for example 5 m³/h to 35 m³/h can be provided. This kind of systems can be used for decentralized municipal water treatment plants. Especially germs and suspended particles can be efficiently removed with such a filtration system.

It should be noted that the above features may also be combined. The combination of the above features may also lead to synergetic effects, even if not explicitly described in detail.

### Brief description of the drawings

In the following for further illustration and to provide a better understanding of the present invention exemplary embodiments are described in more details with reference to the enclosed drawings.

Figure 1 illustrates schematically a cross-sectional view of a filtration device with a supporting structure.

Figure 2 illustrates schematically a cross-sectional view of an exemplary embodiment of a filtration device with a housing.

Figure 3 shows a top view of another exemplary embodiment of the filtration device.

Figure 4 shows a top view of another exemplary embodiment of the filtration device.

Figure 5 shows a cross-sectional view of another exemplary embodiment with a conduit cap.

Figure 6 shows a filter system according to a further exemplary embodiment of the invention with in internal conduit.

Figure 7a to 7c show single steps of the manufacturing method.

Figure 8 shows a filtration device engaged into a filtering system.

Figure 9 shows a flowchart of the steps of a method for manufacturing a filtration device according to an embodiment of the invention.

The illustration in the figures are diagrammatic and not to scale.

### Detailed description of the drawings

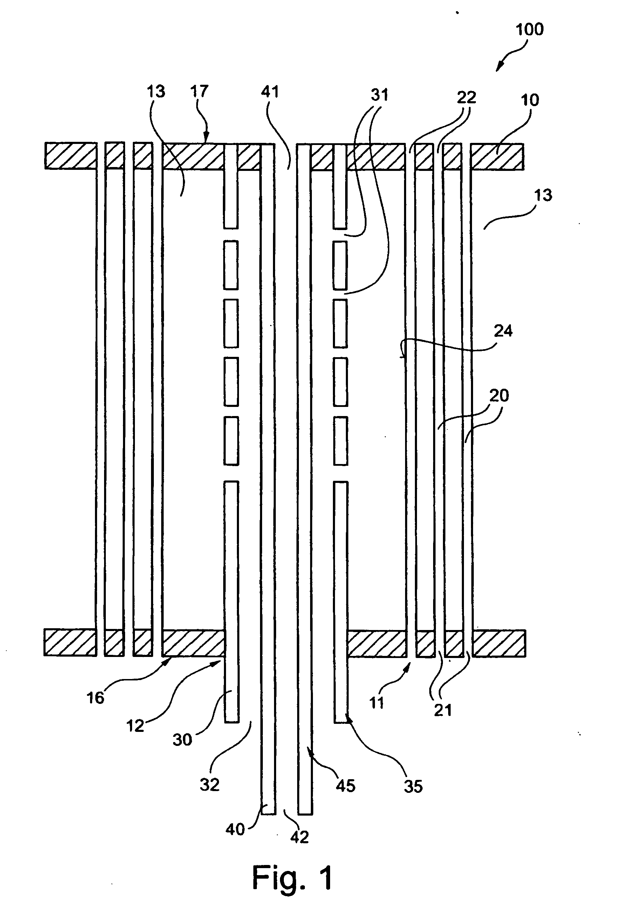

Figure 1 shows a cross- sectional view of a filtration device 100. The filtration device comprises a supporting structure 10 with a filtrate volume 13 and a first opening arrangement 11 and a second opening arrangement 12. The supporting structure comprises a filter volume 13, a first front side or front face 16 and a second front side or front face 17. The material of the front sides is a molding or potting compound such that opening arrangements may be integrated in the front faces by the potting or molding technique.

Figure 1 shows a filter volume 20 as a tubular membrane element. The filter volume 20 represents only one filter membrane schematically and exemplarily. In praxis as many hollow fibers or capillary membranes are integrated in the housing as possible to have a large filtering surface. The filter volume 20 has a first opening arrangement 21 and a second opening arrangement 22. The filter volume 20 is connected by a fluid permeable membrane 24 with the filtrate volume 13. When using a fiber as a filtering volume 20, the first opening arrangement 21 an the second opening arrangement 22 may be formed by potting or molding the fibers into a molding or potting body forming the first face side 16 or second face side 17. Furthermore the Figure 1 shows a collecting conduit 30 with a first opening arrangement 31 and a second opening arrangement 32 as well as a flushing conduit 40 with a first opening arrangement 41 and a second opening arrangement 42. The first opening arrangement 21 of the filter volume 20 is connected with the first opening arrangement 11 of the lower front face 16 of the supporting structure 10.

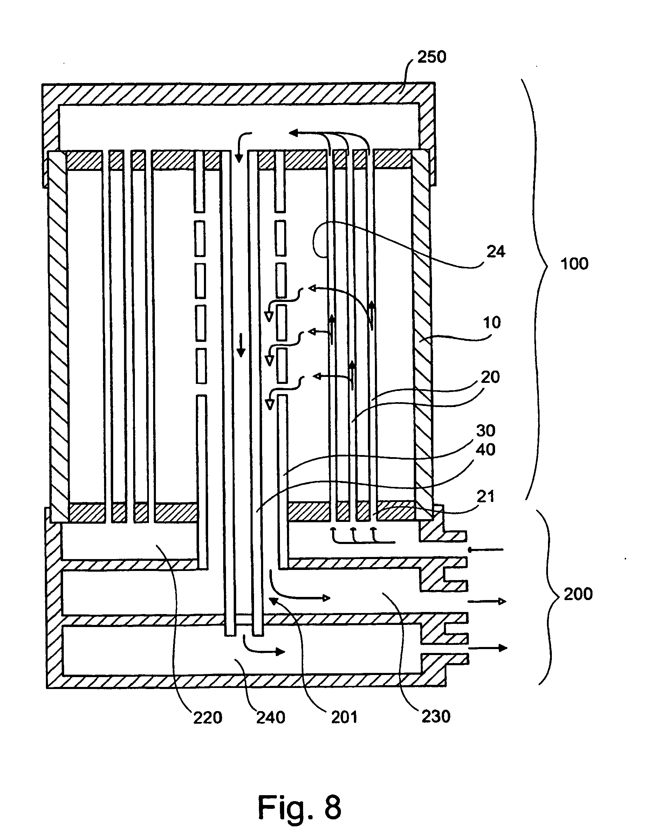

The first opening arrangement 31 of the collecting conduit 30 is connected to the filtrate compartment 13. The first opening arrangement 31 of the collecting conduit 30 is schematically shown in Figure 1 as exemplary perforations. Perforations can be provided at regular distances. Perforations can also be provided at only particular areas of the collection conduit. The second opening arrangement 32 of the collecting conduit 30 corresponds to the second opening arrangement 12 of the supporting structure 10 as shown at the first front face 16 of the supporting structure 10. The flushing conduit 40 is positioned inside the collecting conduit 30 over the entire length of the collecting conduit 30. The collecting conduit 30 has a tubular collecting socket 35 and the flushing conduit 40 has a tubular flushing socket 45, wherein the flushing socket 45 extends over the collecting socket 35. This allows an easier coupling to a filtration system 200 via an interface 201, which will be described in detail with respect to figure 8.

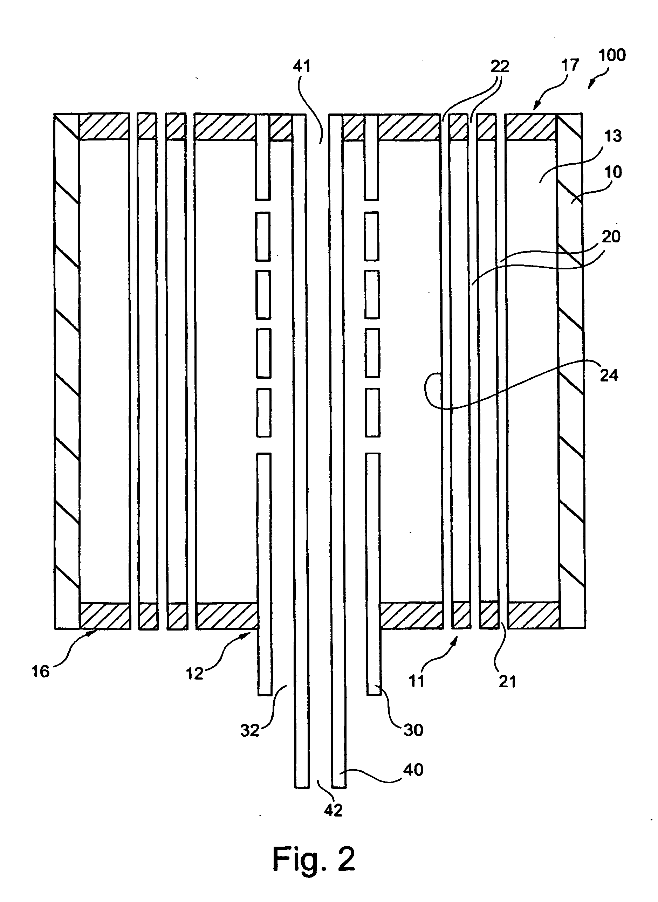

Figure 2 shows a filtration device in which the supporting structure 10 is a housing. The Housing provides for an inner wall 15 defining the filtrate volume 13 as a filtrate compartment. The remaining elements correspond to those of figure 1. The housing is useful when needing a sealed filtration device, which cannot be readily mounted in the field owing to bay environmental conditions, like dusty environments. Nevertheless, the filtration device 100 can also be provided with a supporting structure 10 in form of for example a cage instead of a housing. In this case the filtration element 100 is not sealed and the filtrate volume may be not closed. This allows to provide either a plurality of filtration devices in a single housing, or to design the filtration device as an exchangeable device and a reusable separable housing. The filtration device 100 may be sealed to the housing by sealing or adhesively bonding.

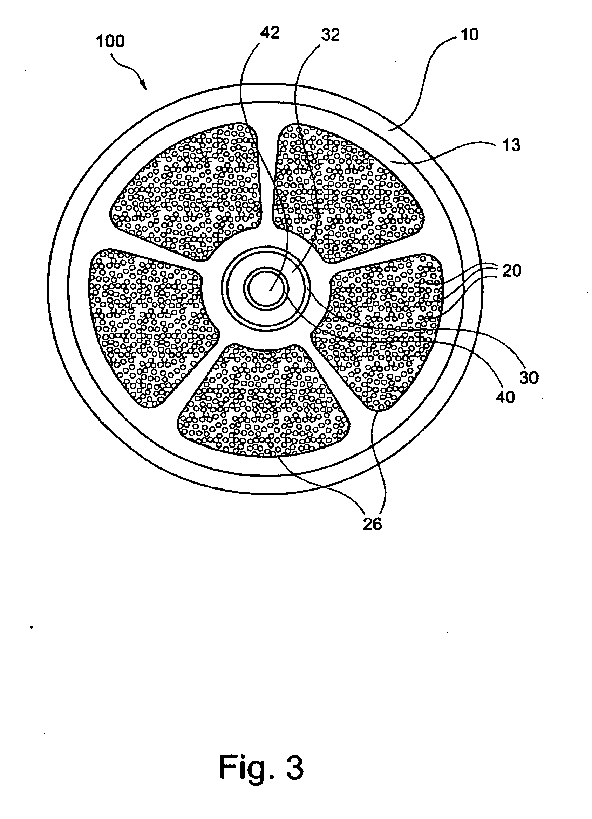

Figure 3 shows a top view of a filtration device. The filtration device 100 of figure 3 includes in the supporting structure 10 or housing a plurality of fiber bundles 26. Each bundle 26 may bundle a plurality of fibers as filtering volumes 20. The bundle may take place by a mesh for supporting brittle fibers and at the same time may allow a filtrate to pass to flow into the collecting conduit 30. The number of bundles 26 or segments may vary and depend on the geometry. As a matter of fact, the bundles may also be arranged in more than one circle.

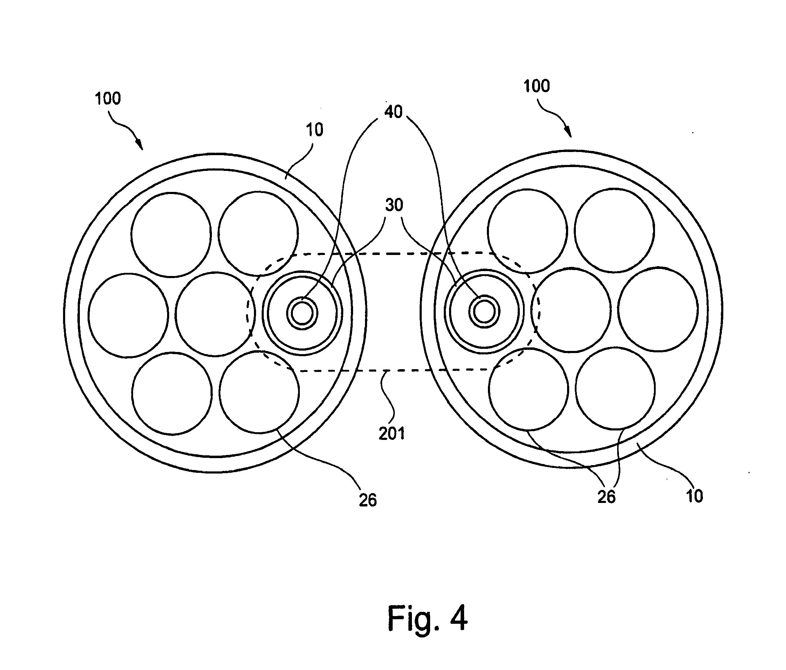

Figure 4 illustrates a further exemplary embodiment of the filter device, or to be exact of two filter devices. The collecting conduit 30 and the flushing conduit 40 are arranged eccentrically into the supporting structure 10 or housing. This allows for the interface 201 to be designed more compact. In particular if a plurality of filter devices will be arranged, the connection to a not shown filter system 200 will be more compact. The bundles 26 are shown very schematically. It should be noted that the bundles may also be smaller in relation to the conduits 30, 40, and be arranged in a more or less arbitrarily manner.

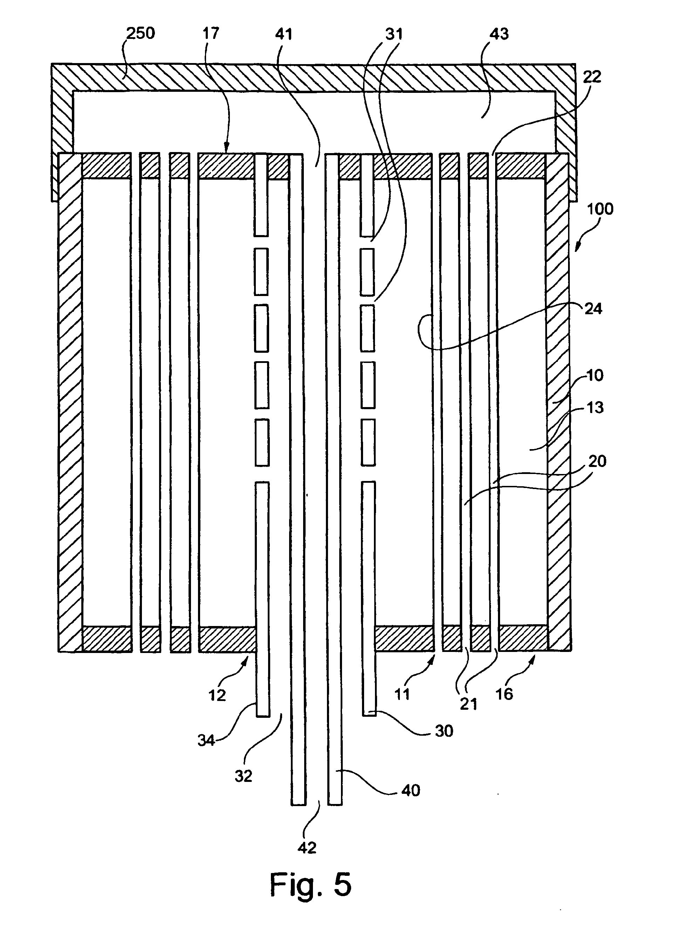

Figure 5 illustrates an embodiment of the invention, where the second opening arrangement 22 of the filtering volume 20 ends on the second front side 17 of the filtration device. Also the first opening arrangement 41 ends on the second face side 17. The second opening arrangement 22 of the filter volume 20 and the first opening arrangement 41 of the flushing conduit can be connected by a conduit volume 43, which may be limited by the second face side 17 and an end cap 250. In other words, a conduit cap 250 together with a face of the second front side 17 forms a conduit volume 43 connecting the second opening arrangement 22 of the filter volume 20 with the first opening arrangement 41 of the flushing conduit 40. The collection conduit 30 is closed with respect to the conduit volume to prevent flushing water from flowing into the collecting conduit 40 before being filtered. Thu, the fluid entering the filter volume 20 at least partially transits the filter membrane 24 and enters the collecting conduit 30 to be guided outwards via the second opening arrangement 32 of the collection conduit. The possible rest of the fluid will be flushed along the longitudinal extension of the filter volume and leaves the filter volume via the second opening arrangement 22 of the filter volume 20 to be guided away through the flushing conduit 40. It should be noted that the flow direction may also be reversed, i.e. to enter the fluid to be filtered first via the flushing conduit 40 and to subsequently pass the fluid to be filtered through the filter volume 20. The principle result is more or less the same. The filtration device 100 may also be flushed back for e.g. cleaning purposes. In this case a fluid enters via the collection conduit 30 and will be reversely pressed through the filter membrane 24. This provides for a dissolving of a build up filter cake, which may be flushed away via the filter volume 20 and the flushing conduit.

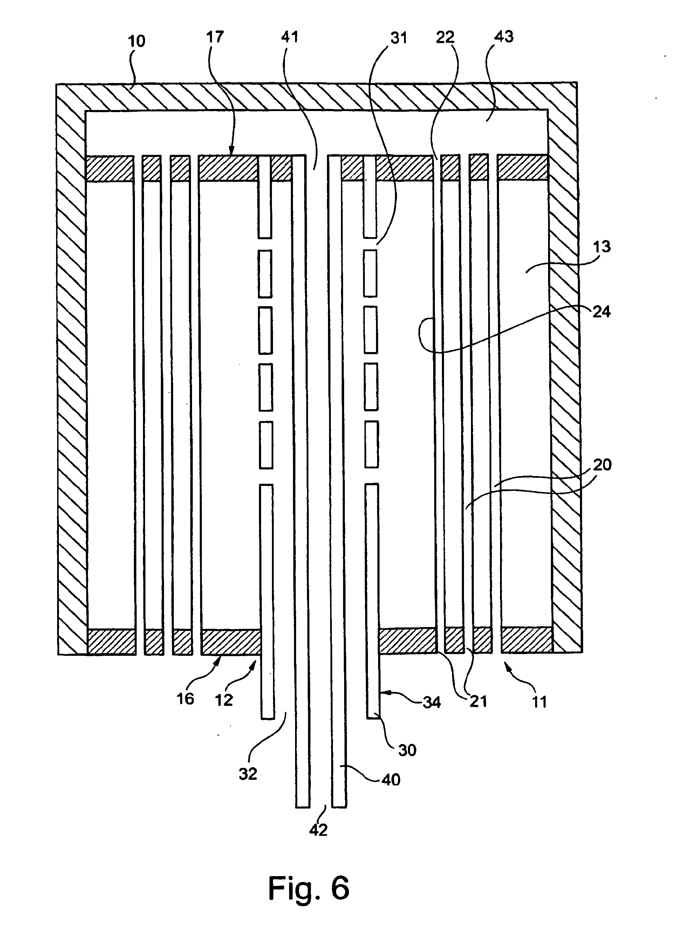

Figure 6 illustrates an embodiment of the present invention, which provides for a conduit volume 43 within the supporting structure 10 or the housing. The illustrated embodiment has a conduit volume which is similar to that of Figure 5, wherein the conduit volume 43 is formed by an inner face wall portion of the housing and a face of the front side 17. The embodiment of Fig. 6 allows to provide a filtration device with a supporting structure 10 which can be changed, wherein the housing 10 can be re-used. In particular, when providing a housing with a front side, no additional cap 250 will be needed. It should be noted, that, even if not shown, also sealing arrangements may be provided in form of rubber, adhesive or any other appropriate material.

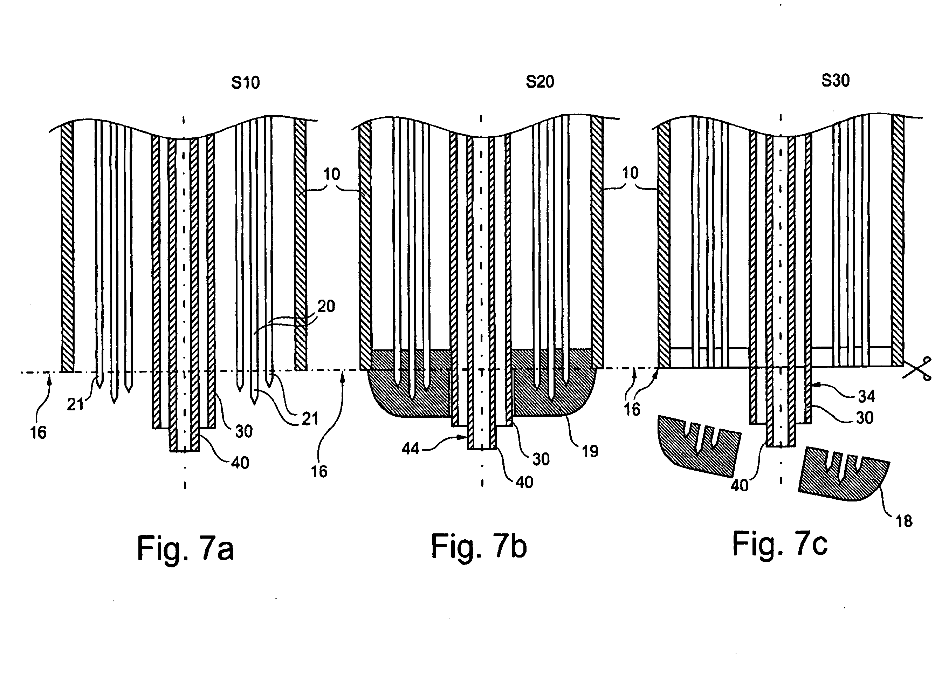

Figure 7a to 7c illustrate the manufacturing steps for a simplified manufacturing process. In Figure 7a the sealing of the filter volume, or more precisely the sealing of the first opening arrangement 21 of the filter volume is illustrated. The opening arrangement 21 extends over the later surface of the first front side 16. The opening arrangement 21 may be melt and thus sealed. As an alternative, the sealing can also be carried out by an adhesive, by a pressing or by a potting or molding mass, which may be the same as that for the potting or molding process to manufacture the first front side 16. When choosing an appropriate viscosity, the potting mass can be prevented from entering the opening arrangement, without an explicit previous sealing. In this case, the sealing and the potting more or less take place at the same time. The collecting conduit 30 and the flushing conduit may also be sealed.

After sealing the filter volumes, e.g. the fibers, extending over the later front side surface 16, the filtration device components will be potted or molded, as illustrated in Figure 7b. For this purpose a potting or molding mass 19 will be casted so as to form a later first front side 16. The mass 19 may be casted from a bottom side. For the casting a so called potting cap can be applied to the edge of the housing to seal the edge of the housing. Such a potting cap may have an opening to receive the collecting conduit 30 and to seal over the collecting conduit 30. This potting cap forms a casting form, which prevents lost of the potting or casting mass. The casting mass can be supplied from a bottom opening of the potting cap. The casting mass will be supplied until the upper level of the filled in casting mass reaches the desired level to form an inner face of the first front face 16. The upper level should be as high as the not sealed conduit of the filter volume 20. The collecting conduit may be covered by a form release agent until a level of the later outer surface of the first front side 16. This allows a later removing and separating of the annulus 18.

After hardening of the casting mass 19, the potting cap can be removed so that the second opening arrangement 31 of the collection conduit 30 and the second opening arrangement 41 of the flushing conduit 40 are released. Afterwards, the hardened casting or potting mass 19 can be radially cut or separated by e.g. a saw blade. The cut may be conducted on the level of the later surface of the first front side 16. However, the cut will be carried out only up to a certain depth corresponding to the outer surface 34 of the collecting conduit 30. The cut will be a circumferential cut with respect to the outer surface 34 of the collecting conduit 30. Owing to the form release agent covering the surface 34 of the collecting conduit 30, an annulus 18 can be removed from the filtering device, as soon as the circumferential cut will be finished, as can be seen in Figure 7c. The cut also separates the sealed end portions of the fibers, or in general of the filter volume 20 or the first opening arrangement 21 thereof. Thus, after cutting, the formerly sealed opening arrangement 21 will be reestablished and a well defined surface of a first front face will be provided. It should be noted that the same procedure slightly modified may be used to form a defined surface of the second front side 17. For this purpose a corresponding potting cap may be used with a sealing of the flushing conduit 40. The outer surface 44 may be covered by a form release agent up to a level of a later outer surface of the second front side 17. The annular space between the collecting conduit 30 and the flushing conduit 40 in the second side 17 will also be filled with casting mass, as can be seen e.g. in Figure 1 and 2. The cut then will be carried out up to the depth of the outer surface 44 of the flushing conduit. Then the annulus can be removed owing to the formerly applied form release agent.

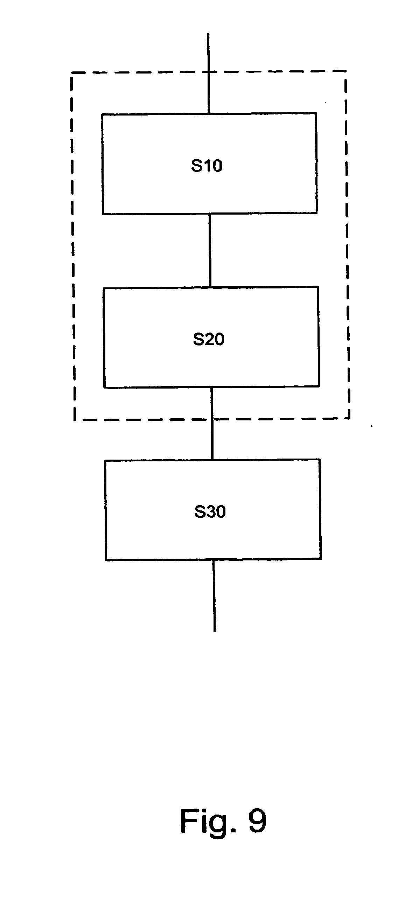

The coaxial arrangement of the collecting conduit 30 and the flushing conduit 40 allow a simple sawing process, since only one bushing is provided, and the sawing can be done with a simple straight saw blade. It should be noted that the sawing process can be carried out either by rotating the saw circumferentially around the collecting conduit 30 or the flushing conduit 40, respectively, or by rotation of the filtration device. For both options the conduits can be centrically or eccentrically arranged, wherein in the latter case the filtration device moves eccentrically around the longitudinal axis of the respective conduit 30, 40. Figure 9 illustrates a flow chart of the method described with respect to Figures 7a to 7c. The dashed line illustrates that the steps S10 and S20 can also be carried out simultaneously.

Figure 8 illustrates a filtration system 200 with an implemented filtration device according to the invention. The filtration system 200 comprises an interface 201 for coupling a filtration device 100. The interface provides a flushing portion 240 for coupling the flushing conduit 40 and a collection portion 230 for coupling the collection conduit 30. Further, the filtration system 200 may include a supplying portion 220 for the feeding of the fluid to be filtered. The arrow with the open tip illustrates the fluid inflow for the fluid to be filtered. The arrow with the white tip illustrates the filtrated fluid, which transited through the filter membrane 24. The arrow with the black tip illustrates the fluid portion, which had not been filtered. The latter is the flushing portion of the fluid. The illustrated filtration system 200 and filter device 100 allow a plug and work solution allowing a fast exchange of the filter device 100 with respect to the filtration system 200. In particular all the interface openings may be provided on one front face 16 of the filtration device.

It should be pointed out that "comprising" does not exclude other elements, and "a" or "an" does not exclude a plurality of elements.

## Claims

1. Filtration device for filtering a fluid, wherein the filtration device comprises:
- a supporting structure (10) with a first front side (16), a second front side (17), a filtrate volume (13), a first opening arrangement (11) and a second opening arrangement (12);
- a filter volume (20) having a first opening arrangement (21) and a second opening arrangement (22);
- a collecting conduit (30) having a first opening arrangement (31) and a second opening arrangement (32); and
- a flushing conduit (40) having a first opening arrangement (41) and a second opening arrangement (42);
wherein the first front side (16) and the second front side (17) and a cylindrical wall (15) form a housing;
wherein the filter volume (20) is connected via a fluid permeable hollow fiber membrane (24) with the filtrate volume (13);
wherein the first opening arrangement (21) of the filter volume (20) is connected with the first opening arrangement (11) of the first front side (16);
wherein the second opening arrangement (22) of the filter volume (20) is connectable with the first opening arrangement (41) of the flushing conduit (40) by a fluid connection;
wherein the first opening arrangement (31) of the collecting conduit (30) is connected to the filtrate volume (13);
wherein the second opening arrangement (32) of the collecting conduit (30) corresponds to the second opening arrangement (12) of the first front side (16); and
wherein the flushing conduit (40) is positioned in the region of the second opening arrangement (12) of the first front side (16) inside the collecting conduit (30) **characterised in that**
the collecting conduit (30) is positioned eccentrically in relation to the cylindrical wall (15) of the housing.

2. Filtration device according to claim 1, wherein the flushing conduit (40) is positioned concentrically in the collecting conduit (30).

3. Filtration device according to any of the claims 1 and 2, wherein the second opening arrangement (32) of the collecting conduit (30) comprises a collecting conduit socket (35) and a second opening arrangement (42) of the flushing conduit (40) comprises a flushing conduit socket (45) as connections to the outside of the filtration device (100).

4. Filtration device according to claim 3, wherein the flushing conduit socket (45) outranges the second opening (32) of the collecting conduit (30).

5. Filtration device according to any of the claims 1 to 4, wherein the second opening arrangement (22) and the first opening arrangement (41) of the flushing conduit (40) penetrates the second front side (17) of the supporting structure (10).

6. Filtration device according to any of the claims 1 to 5, wherein the fluid connection between second opening arrangement (22) of the filter volume (20) and the first opening arrangement (41) of the flushing conduit (40) is formed by a limitation volume (43), the limitation volume comprising a face of a second front side (17) of the supporting structure (10) and a conduit cap (250) covering the face of the second front side (17).

7. Filtration device according to any of the claims 1 to 6, wherein the second opening arrangement (21) and the first opening arrangement (41) of the flushing conduit (40) are directly or indirectly connected inside the supporting structure.

8. Method for manufacturing a filtration device comprising
- a supporting structure (10) with a first front side (16), a second front side (17), a filtrate volume (13), a first opening arrangement (11) and a second opening arrangement (12);
- a filter volume (20) having a first opening arrangement (21) and a second opening arrangement (22);
- a collecting conduit (30) having a first opening arrangement (31) and a second opening arrangement (32); and
- a flushing conduit (40) having a first opening arrangement (41) and a second opening arrangement (42);
wherein the first front side (16) and the second front side (17) and a cylindrical wall (15) form a housing;
wherein the collecting conduit (30) is positioned eccentrically in relation to the cylindrical wall (15) of the housing;
wherein the filter volume (20) is connected via a fluid permeable hollow fibre membrane (24) with the filtrate volume (13);
wherein the first opening arrangement (21) of the filter volume (20) is connected with the first opening arrangement (11) of the first front side (16);
wherein the second opening arrangement (22) of the filter volume (20) is connectable with the first opening arrangement (41) of the flushing conduit (40) by a fluid connection;
wherein the first opening arrangement (31) of the collecting conduit (30) is connected to the filtrate volume (13);
wherein the second opening arrangement (32) of the collecting conduit (30) corresponds to the second opening arrangement (12) of the first front side (16);
wherein the flushing conduit (40) is positioned in the region of the second opening arrangement (12) of the first front side (16) inside the collecting conduit (30);
; and
wherein the method comprises:
sealing (S10) of a first arrangement of openings (21) of a filter volume (20) protruding from a later first front face (16) of a housing (10);
potting (S20) of a space between an inner surface (18) of a cylindrical wall (15) of a housing (10) and an outer surface (34) of a collecting conduit (30) protruding from a later first front face (16) up to a predefined thickness; and
manufacturing (S30) of a first front side (16) and a first opening arrangement (21) by separating an annulus (18) up to the outer surface (34) of the collecting conduit (30).

9. A filtration system for filtering, wherein the filtration system (200) comprises
at least one filter device (100) according to any of the claims 1 to 8; and
an interface (201) having a collecting conduit (230) with an eccentrically positioned flushing conduit (240) for employing the at least one filter device (100).

10. Filtration system according to claim 9, wherein the filtration system (200) is designed as a water treatment plant comprising several filtration devices (100) with modular connections.

## Patentansprüche

1. Filtrationsvorrichtung zum Filtern eines Fluids, wobei die Filtrationsvorrichtung Folgendes umfasst:
- eine Stützkonstruktion (10) mit einer ersten Vorderseite (16), einer zweiten Vorderseite (17), einem Filtratvolumen (13), einer ersten Öffnungsanordnung (11) und einer zweiten Öffnungsanordnung (12);
- ein Filtervolumen (20), das eine erste Öffnungsanordnung (21) und eine zweite Öffnungsanordnung (22) hat;
- ein Sammelrohr (30), das eine erste Öffnungsanordnung (31) und eine zweite Öffnungsanordnung (32) hat; und
- ein Spülrohr (40), das eine erste Öffnungsanordnung (41) und eine zweite Öffnungsanordnung (42) hat);
wobei die erste Vorderseite (16) und die zweite Vorderseite (17) und eine zylindrische Wand (15) ein Gehäuse bilden;
wobei das Filtervolumen (20) über eine fluiddurchlässige Hohlfasermembran (24) mit dem Filtratvolumen (13) verbunden ist;
wobei die erste Öffnungsanordnung (21) des Filtervolumens (20) mit der ersten Öffnungsanordnung (11) der ersten Vorderseite (16) verbunden ist;
wobei die zweite Öffnungsanordnung (22) des Filtervolumens (20) mit der ersten Öffnungsanordnung (41) des Spülrohrs (40) durch eine Fluidverbindung verbunden werden kann;
wobei die erste Öffnungsanordnung (31) des Sammelrohrs (30) mit dem Filtratvolumen (13) verbunden ist;
wobei die zweite Öffnungsanordnung (32) des Sammelrohrs (30) der zweiten Öffnungsanordnung (12) der ersten Vorderseite (16) entspricht; und
wobei das Spülrohr (40) sich im Bereich der zweiten Öffnungsanordnung (12) der ersten Vorderseite (16) im Innern des Sammelrohrs (30) befindet, **dadurch gekennzeichnet, dass** das Sammelrohr (30) exzentrisch zur zylindrischen Wand (15) des Gehäuses angeordnet ist.

2. Filtrationsvorrichtung nach Anspruch 1, wobei das Spülrohr (40) konzentrisch im Sammelrohr (30) angeordnet ist.

3. Filtrationsvorrichtung nach einem der Ansprüche 1 und 2, wobei die zweite Öffnungsanordnung (32) des Sammelrohrs (30) eine Sammelrohrmuffe (35) umfasst, und eine zweite Öffnungsanordnung (42) des Sammelrohrs (40) eine Spülrohrmuffe (45) als Verbindung zur Außenseite der Filtrationsvorrichtung (100) umfasst.

4. Filtrationsvorrichtung nach Anspruch 3, wobei die Spülrohrmuffe (45) die zweite Öffnung (32) des Sammelrohrs (30) überragt.

5. Filtrationsvorrichtung nach einem der Ansprüche 1 bis 4, wobei die zweite Öffnungsanordnung (22) und die erste Öffnungsanordnung (41) des Spülrohrs (40) in die zweite Vorderseite (17) der Stützkonstruktion (10) vordringen.

6. Filtrationsvorrichtung nach einem der Ansprüche 1 bis 5, wobei die Fluidverbindung zwischen der zweiten Öffnungsanordnung (22) des Filtervolumens (20) und der ersten Öffnungsanordnung (41) des Spülrohrs (40) durch ein Begrenzungsvolumen (43) gebildet wird, wobei das Begrenzungsvolumen eine Fläche einer zweiten Vorderseite (17) der Stützkonstruktion (10) und einen Rohrdeckel (250) umfasst, der die Fläche der zweiten Vorderseite (17) abdeckt.

7. Filtrationsvorrichtung nach einem der Ansprüche 1 bis 6, wobei die zweite Öffnungsanordnung (21) und die erste Öffnungsanordnung (41) des Spülrohrs (40) direkt oder indirekt innerhalb der Stützkonstruktion verbunden sind.

8. Verfahren zum Herstellen einer Filtrationsvorrichtung, umfassend
- eine Stützkonstruktion (10) mit einer ersten Vorderseite (16), einer zweiten Vorderseite (17), einem Filtratvolumen (13), einer ersten Öffnungsanordnung (11) und einer zweiten Öffnungsanordnung (12);
- ein Filtervolumen (20), das eine erste Öffnungsanordnung (21) und eine zweite Öffnungsanordnung (22) hat;
- ein Sammelrohr (30), das eine erste Öffnungsanordnung (31) und eine zweite Öffnungsanordnung (32) hat; und
- ein Spülrohr (40), das eine erste Öffnungsanordnung (41) und eine zweite Öffnungsanordnung (42) hat;
wobei die erste Vorderseite (16) und die zweite Vorderseite (17) und eine zylindrische Wand (15) ein Gehäuse bilden;
wobei das Sammelrohr (30) exzentrisch zur zylindrischen Wand (15) des Gehäuses angeordnet ist;
wobei das Filtervolumen (20) über eine fluiddurchlässige Hohlfasermembran (24) mit dem Filtratvolumen (13) verbunden ist;
wobei die erste Öffnungsanordnung (21) des Filtervolumens (20) mit der ersten Öffnungsanordnung (11) der ersten Vorderseite (16) verbunden ist;
wobei die zweite Öffnungsanordnung (22) des Filtervolumens (20) mit der ersten Öffnungsanordnung (41) des Spülrohrs (40) durch eine Fluidverbindung verbunden werden kann;
wobei die erste Öffnungsanordnung (31) des Sammelrohrs (30) mit dem Filtratvolumen (13) verbunden ist;
wobei die zweite Öffnungsanordnung (32) des Sammelrohrs (30) der zweiten Öffnungsanordnung (12) der ersten Vorderseite (16) entspricht);
wobei das Spülrohr (40) im Bereich der zweiten Öffnungsanordnung (12) der ersten Vorderseite (16) innerhalb des Sammelrohrs (30) angeordnet ist; und
wobei das Verfahren Folgendes umfasst:
Abdichten (S10) einer ersten Anordnung von Öffnungen (21) eines Filtervolumens (20), die von einer späteren ersten Vorderfläche (16) eines Gehäuses (10) vorragt;
Vergießen (S20) eines Raums zwischen einer Innenfläche (18) einer zylindrischen Wand (15) eines Gehäuses (10) und einer Außenfläche (34) eines Sammelrohrs (30), das von einer späteren ersten Vorderfläche (16) vorragt, bis zu einer vorgegebenen Dicke; und
Herstellen (S30) einer ersten Vorderseite (16) und einer ersten Öffnungsanordnung (21) durch Abtrennen eines Ringraums (18) bis zur Außenfläche (34) des Sammelrohrs (30).

9. Filtrationssystem zum Filtern, wobei das Filtrationssystem (200) mindestens eine Filtrationsvorrichtung (100) nach einem der Ansprüche 1 bis 8 umfasst; und
eine Verbindung (201), die ein Sammelrohr (230) mit einem exzentrisch angeordneten Spülrohr (240) hat, für den Einsatz der mindestens einer Filtrationsvorrichtung (100).

10. Filtrationssystem nach Anspruch 9, wobei das Filtrationssystem (200) als Wasseraufbereitungsanlage ausgelegt ist, die mehrere Filtrationsvorrichtungen (100) mit modularen Verbindungen umfasst.

## Revendications

1. Dispositif de filtration pour filtrer un fluide, dans lequel le dispositif de filtration comprend :
- une structure de support (10) avec un premier côté avant (16), un deuxième côté avant (17), un volume de filtrat (13), un premier dispositif d'ouvertures (11) et un deuxième dispositif d'ouvertures (12) ;
- un volume de filtre (20) possédant un premier dispositif d'ouvertures (21) et un deuxième dispositif d'ouvertures (22) ;
- un conduit collecteur (30) possédant un premier dispositif d'ouvertures (31) et un deuxième dispositif d'ouvertures (32) ; et
- un conduit de rinçage (40) possédant un premier dispositif d'ouvertures (41) et un deuxième dispositif d'ouvertures (42) ;
dans lequel le premier côté avant (16) et le deuxième côté avant (17) et une paroi cylindrique (15) forment un boîtier ;
dans lequel le volume de filtre (20) est raccordé par l'intermédiaire d'une membrane en fibres creuses perméables aux fluides (24) au volume de filtrat (13) ;
dans lequel le premier dispositif d'ouvertures (21) du volume de filtre (20) est raccordé au premier dispositif d'ouvertures (11) du premier côté avant (16) ;
dans lequel le deuxième dispositif d'ouvertures (22) du volume de filtre (20) est raccordable au premier dispositif d'ouvertures (41) du conduit de rinçage (40) par un raccord de fluide ;
dans lequel le premier dispositif d'ouvertures (31) du conduit collecteur (30) est raccordé au volume de filtrat (13) ;
dans lequel le deuxième dispositif d'ouvertures (32) du conduit collecteur (30) correspond au deuxième dispositif d'ouvertures (12) du premier côté avant (16) ; et
dans lequel le conduit de rinçage (40) est positionné dans la région du deuxième dispositif d'ouvertures (12) du premier côté avant (16) à l'intérieur du conduit collecteur (30), **caractérisé en ce que** le conduit collecteur (30) est positionné de façon excentrique par rapport à la paroi cylindrique (15) du boîtier.

2. Dispositif de filtration selon la revendication 1, dans lequel le conduit de rinçage (40) est positionné de façon concentrique dans le conduit collecteur (30).

3. Dispositif de filtration selon l'une quelconque des revendications 1 et 2, dans lequel le deuxième dispositif d'ouvertures (32) du conduit collecteur (30) comprend une prise de conduit collecteur (35) et un deuxième dispositif d'ouvertures (42) du conduit de rinçage (40) comprend une prise de conduit collecteur (45) en guise de connexions vers l'extérieur du dispositif de filtration (100).

4. Dispositif de filtration selon la revendication 3, dans lequel la prise de conduit de rinçage (45) dépasse la deuxième ouverture (32) du conduit collecteur (30).

5. Dispositif de filtration selon l'une quelconque des revendications 1 à 4, dans lequel le deuxième dispositif d'ouvertures (22) et le premier dispositif d'ouvertures (41) du conduit de rinçage (40) pénètrent le deuxième côté avant (17) de la structure de support (10).

6. Dispositif de filtration selon l'une quelconque des revendications 1 à 5, dans lequel le raccord de fluide entre le deuxième dispositif d'ouvertures (22) du volume de filtre (20) et le premier dispositif d'ouvertures (41) du conduit de rinçage (40) est formé par un volume de limitation (43), le volume de limitation comprenant une face d'un deuxième côté avant (17) de la structure de support (10) et un bouchon de conduit (250) couvrant la face du deuxième côté avant (17).

7. Dispositif de filtration selon l'une quelconque des revendications 1 à 6, dans lequel le deuxième dispositif d'ouvertures (21) et le premier dispositif d'ouvertures (41) du conduit de rinçage (40) sont directement ou indirectement raccordés à l'intérieur de la structure de support.

8. Procédé de fabrication d'un dispositif de filtration comprenant
- une structure de support (10) avec un premier côté avant (16), un deuxième côté avant (17), un volume de filtrat (13), un premier dispositif d'ouvertures (11) et un deuxième dispositif d'ouvertures (12) ;
- un volume de filtre (20) possédant un premier dispositif d'ouvertures (21) et un deuxième dispositif d'ouvertures (22) ;
- un conduit collecteur (30) possédant un premier dispositif d'ouvertures (31) et un deuxième dispositif d'ouvertures (32) ; et
- un conduit de rinçage (40) possédant un premier dispositif d'ouvertures (41) et un deuxième dispositif d'ouvertures (42) ;
dans lequel le premier côté avant (16) et le deuxième côté avant (17) et une paroi cylindrique (15) forment un boîtier ;
dans lequel le conduit collecteur (30) est positionné de façon excentrique par rapport à la paroi cylindrique (15) du boîtier ;
dans lequel le volume de filtre (20) est raccordé par l'intermédiaire d'une membrane en fibres creuses perméables aux fluides (24) au volume de filtrat (13) ;
dans lequel le premier dispositif d'ouvertures (21) du volume de filtre (20) est raccordé au premier dispositif d'ouvertures (11) du premier côté avant (16) ;
dans lequel le deuxième dispositif d'ouvertures (22) du volume de filtre (20) est raccordable au premier dispositif d'ouvertures (41) du conduit de rinçage (40) par un raccord de fluide ;
dans lequel le premier dispositif d'ouvertures (31) du conduit collecteur (30) est raccordé au volume de filtrat (13) ;
dans lequel le deuxième dispositif d'ouvertures (32) du conduit collecteur (30) correspond au deuxième dispositif d'ouvertures (12) du premier côté avant (16) ;
dans lequel le conduit de rinçage (40) est positionné dans la région du deuxième dispositif d'ouvertures (12) du premier côté avant (16) à l'intérieur du conduit collecteur (30) ; et
dans lequel le procédé comprend :
la fermeture hermétique (S10) d'un premier dispositif d'ouvertures (21) d'un volume de filtre (20) faisant saillie depuis une première face avant postérieure (16) d'un boîtier (10) ;
l'empotage (S20) d'un espace entre une surface interne (18) d'une paroi cylindrique (15) d'un boîtier (10) et une surface externe (34) d'un conduit collecteur (30) faisant saillie depuis une première face avant postérieure (16) jusqu'à une épaisseur prédéfinie ; et
la fabrication (S30) d'un premier côté avant (16) et d'un premier dispositif d'ouvertures (21) par séparation d'un espace annulaire (18) jusqu'à la surface externe (34) du conduit collecteur (30).

9. Système de filtration pour filtrer, dans lequel le système de filtration (200) comprend
au moins un dispositif de filtre (100) selon l'une quelconque des revendications 1 à 8 ; et
une interface (201) possédant un conduit collecteur (230) avec un conduit de rinçage positionné de façon excentrique (240) pour utiliser l'au moins un dispositif de filtre (100).

10. Système de filtration selon la revendication 9, dans lequel le système de filtration (200) est conçu comme une usine de traitement des eaux comprenant plusieurs dispositifs de filtration (100) avec des raccords modulaires.
